# EUROPÄISCHE PATENTANMELDUNG

(11) **EP 1 600 210 A1**
(43) Veröffentlichungstag der Anmeldung: **30.11.2005**
(21) Anmeldenummer: 04012285.5
(22) Anmeldetag: 25.05.2004
(51) Int. Cl.: B01J 13/02, B01J 13/04, B01J 20/00, B01J 20/26

(54) **Beladene Mikrosphären**

(71) Anmelder: Cognis IP Management GmbH, 40589 Düsseldorf (DE)
(72) Erfinder: Viladot Petit, Josep-Lluis, Dr., 08018 Barcelona (ES); Caldero Linnhoff, Gabriela, Dr., 08034 Barcelona (ES)

(57) **Zusammenfassung**

Vorgeschlagen werden beladene Mikrosphären mit einem mittleren Durchmesser von 0,001 bis 1 mm, die man dadurch erhält, dass man feinverteiltes Polymethylmethacrylat oder Methylmethacrylat-Crosspolymer solange mit lipophilen oder hydrophilen Wirkstoffen vermischt, bis diese von der Oberfläche des Polymers absorbiert bzw. adsorbiert worden sind und ein trockenes Pulver, ein Granulat oder eine Paste erhalten wird.

## Beschreibung

### Gebiet der Erfindung

Die Erfindung befindet sich auf dem Gebiet der verzögerten Freisetzung von Wirkstoffen, insbesondere für die textile Ausrüstung und betrifft mit Wirkstoffen beladene Mikrosphären auf Basis von PMMA, ein Verfahren zu ihrer Herstellung sowie zahlreiche Verwendungen der Produkte.

### Stand der Technik

Unter dem Begriff "Tragekomfort" werden gestiegene Anforderungen des Verbrauchers zusammengefasst, der sich nicht mehr allein damit zufrieden geben will, dass die von ihm unmittelbar auf der Haut getragene Wäsche, wie beispielsweise Dessous oder Strumpfhosen weder kratzen noch Hautrötungen verursachen, sondern ganz umgekehrt erwartet, dass sie sich positiv auf den Zustand seiner Haut auswirkt. Dabei kann es sich sowohl darum handeln, Ermüdungserscheinungen abzuhelfen, als auch einen frischen Duft zu vermitteln oder Hautrauhigkeiten zu vermeiden.

Es hat daher nicht an Bemühungen gefehlt, Textilien und abermals insbesondere Damenstrumpfhosen - dies scheint ein besonders attraktives Konsumentenfeld zu sein - mit kosmetischen Wirkstoffen auszurüsten, die beim Tragen auf die Haut übergehen und dort die gewünschten Effekte hervorrufen. Nun liegt es in der Natur der Sache, dass die gewünschten Wirkungen nur dann zustande kommen, wenn der entsprechende Wirkstoff vom Träger auf die Haut übertragen wird, d.h. nach einer mehr oder weniger langen Tragezeit ist auf dem Bekleidungsstück kein Wirkstoff mehr vorhanden. Dies stellt an den Hersteller solcher Produkte gewisse Anforderungen bei der Auswahl der Wirkstoffe, denn unter Abwägung von Leistung, aufbringbarer Menge und nicht zuletzt der damit verbundenen Kosten muss er einen Kompromiss finden, der ein Produkt ermöglicht, dessen Wirkung erlebbar ist und dessen erhöhter Preis auf vom Kunden gezahlt werden kann. Da kosmetische Wirkstoffe, die die gewünschten Wirkungen aufweisen, in aller Regel teuer sind und auch die Ausrüstung der Endprodukte mit zusätzlichen Kosten verbunden ist, ist es für den Hersteller von besonderer Bedeutung, dass es außer durch den Kontakt zwischen ausgerüstetem Endprodukt und der Haut des Trägers nicht zu weiteren unerwünschten Verlusten an Wirkstoffen kommt, da dies dazu führen würde, dass der vom Kunden teuer bezahlte zusätzliche Tragekomfort über eine kürzere Zeit wirksam wird. Eine besonders unerwünschte Form des Wirkstoffverlustes tritt im Zusammenhang mit der Wäsche der so ausgerüsteten Fasern und Textilien auf. Auch wenn sich diese Verluste nicht völlig vermeiden lassen, so liegt es auf der Hand, dass es ein besonderes Anliegen der Hersteller entsprechender Produkte ist, die Wirkstoffe in solcher Weise auf die Fasern aufzubringen, dass diese nicht ohne weiteres aufgelöst oder mechanisch abgelöst werden.

Anstelle der vielfach durchführten Imprägnierverfahren, bei denen die Wirkstoffe direkt auf die Fasern oder Textilien aufgebracht werden, hat daher in den letzten Jahren der Einsatz von mikroverkapselten Wirkstoffen an Bedeutung gewonnen. Dahinter steht die Überlegung, wasserlösliche oder wasserdispergierbare Wirkstoffe in wasserunlöslichen Kapseln einzuschließen, welche die aktiven Prinzipien während des Tragens entweder durch kontrollierte Freisetzung durch Membranporen oder durch mechanische Zerstörung der Hüllmembranen abgeben. Auf diese Weise lassen sich die Verluste, die im Verlauf vieler Waschzyklen auftreten, im Vergleich zum Einsatz unverkapselter Wirkstoffe tatsächlich beträchtlich vermindern. Die so erzielten Ergebnisse sind in Summe jedoch längst nicht zufriedenstellend, da die verkapselten Wirkstoffen nur locker zwischen den Faserfibrillen gelagert sind und somit beispielsweise durch mechanische Einwirkung während des Waschvorgangs leicht ausgespült werden können und/oder zur Haftung die zusätzliche Verwendung von organischen Bindemittel erfordern. Ein weiterer Nachteil besteht darin, dass viele der bekannten Mikrokapseln in wässriger Umgebung hinreichend beständig sind, bei Wasserverlust jedoch kollabieren und den Wirkstoff unkontrolliert und spontan freisetzen.

In diesem Zusammenhang sei auf die Britische Patentanmeldung **GB 2356386 A1** (Tagra) hingewiesen, aus der ein Verfahren zur Herstellung von Mikrokapseln bekannt ist, bei dem man eine erste wässrige/organische Zubereitung eines Emulgators mit einer zweiten Lösung oder Dispersion eines Wirkstoffs und eines Polymers (z.B. PMMA) in einem organischen Lösemittel mischt. In der **US 20030112491 A1** (E Ink Corp.) werden Partikel beispielsweise auf Basis von PMMA, die einen flüssigen Farbstoff umhüllen, vorgeschlagen, die in einer Flüssigkeit suspendiert vorliegen und sich für die Herstellung von LCD-Bildschirme eignen. In der **EP 0611253 B1** (Novartis) wird die Verkapselung von Pestiziden in einem System aus Polyisocyanaten und Polyaminen vorgeschlagen, wobei die Reaktion in Gegenwart nichtionischer Polymere durchgeführt wird, die PMMA-Blöcke enthalten können. Schließlich sind aus der **WO 97/023194 A1** (Cheil Jedang Corp.) Shampoos mit Mikrokapseln bekannt, die neben Ölen auch PMMA-Decadien-Crosspolymere enthalten.

Die Aufgabe der vorliegenden Erfindung hat folglich darin bestanden, Wirkstoffe so an hautkosmetisch und toxikologisch unbedenkliche Träger zu binden, dass mit technisch möglichst geringem Aufwand beladene Teilchen erzeugt werden, die auch im trockenen Zustand den Wirkstoff nur zeitverzögert freisetzen. Eine besondere zusätzliche Aufgabe war es, Teilchen eines so geringen mittleren Durchmessers, vorzugsweise von deutlich unter 1 mm zu erzeugen, so dass diese sich auch ohne Verwendung von Bindemittel bei der textilen Ausrüstung zwischen die Fasern einlagern.

### Beschreibung der Erfindung

Gegenstand der Erfindung sind beladene Mikrosphären mit einem mittleren Durchmesser von 0,001 bis 1, vorzugsweise 0,01 bis 0,05 mm, die man dadurch erhält, dass man feinverteiltes Polymethylmethacrylat oder Methylmethacrylat-Crosspolymer solange mit lipophilen oder hydrophilen Wirkstoffen vermischt, bis diese von der Oberfläche des Polymers absorbiert bzw. adsorbiert worden sind und ein trockenes Pulver, ein Granulat oder eine Paste erhalten wird.

Überraschenderweise wurde gefunden, dass unter den Polymeren gerade feinverteiltes Polymethylacrylat (PMMA) und insbesondere Methylmethacrylat-Crosspolymer ein überaus hohes Adsorptionsvermögen für eine Vielzahl von Wirkstoffen hat. Die beladenen Mikrosphären zeigen in Wasser praktisch keine Tendenz zur Aggregation und sind insbesondere nach Trocknung formstabil, d.h. geben den Wirkstoff tatsächlich mit dem Wasserverlust nicht spontan, sondern nur zeitverzögert ab. Diese Eigenschaft kann man insbesondere zur Ausrüstung von textilen Flächengebilden ausnutzen, da PMMA-Mikrosphären so klein sind, dass sie sich auch ohne Binder zwischen die einzelnen Fasern legen und auf diese Weise auch nur langsam ausgewaschen werden. Ein weiterer Vorteil besteht in ihrer technisch einfachen Herstellung, wozu insbesondere keine Mitverwendung von organischen Lösemittel erforderlich ist.

Ein weiterer Gegenstand der vorliegenden Erfindung betrifft ein Verfahren zur Herstellung von beladenen Mikrosphären mit einem mittleren Durchmesser von 0,001 bis 1, vorzugsweise 0,01 bis 0,05 mm, bei dem man feinverteiltes Polymethylmethacrylat oder Methylmethacrylat-Crosspolymer solange mit lipophilen oder hydrophilen Wirkstoffen vermischt, bis diese von der Oberfläche des Polymers absorbiert bzw. adsorbiert worden sind und ein trockenes Pulver, ein Granulat oder eine Paste erhalten wird.

### Wirkstoffe

Die Auswahl der Wirkstoffe ist an sich unkritisch und richtet sich ausschlich danach, welcher Effekt auf der Haut bewirkt werden soll. Für die textile Ausrüstung, aber auch für die kosmetische Anwendungen, sind solche Wirkstoffe bevorzugt, die feuchtigkeitsspendende Eigenschaften aufweisen, Cellulitis entgegenwirken und/oder selbstbräunend sind. Typische Beispiele sind Tocopherol, Tocopherolacetat, Tocopherolpalmitat, Carotine, Koffein, Ascorbinsäure, (Desoxy)Ribonukleinsäure und deren Fragmentierungsprodukte, β-Glucane, Retinol, Bisabolol, Allantoin, Phytantriol, Panthenol, AHA-Säuren, Aminosäuren, Ceramide, Pseudoceramide, Chitosan, Dihydroxyaceton, Menthol, Squalan, essentielle Öle (z.B. Jojobaöl), pflanzliche Proteine und deren Hydrolyseprodukte, Pflanzenextrakte, wie z.B. Extrakte von *Ginkgo biloba, Camellia sinensis, Trifolium pratensis, Oleacea europensis, Litchi sinensis, Valeriana oficinalis, Medicago sativa, Vitis vinifera, Passiflora incarnata* und dergleichen sowie Vitaminkomplexe zu verstehen. Besonders bevorzugt ist der Einsatz von
- pflanzliche Öle, insbesondere Squalan,
- Chitosan,
- Menthol,
- Retinol (bzw. Vitamin A),
- Koffein,
- pflanzliche oder tierische Proteine und deren Hydrolyseprodukte,
- Carotine und
- Jojobaöl
da diese über ein sehr breites Eigenschaftsprofil verfügen und einzeln bzw. in Kombination
- zum Gleichgewicht der cutanen Hydrolipidschicht beitragen,
- dem Wasserverlust und damit der Faltenbildung vorbeugen,
- die Haut erfrischen und Ermüdungserscheinungen entgegenwirken,
- der Haut ein weiches und elastisches Gefühl verleihen,
- die Hautdrainage, die Zufuhr von Nährstoffen und die Blutzirkulation verbessern,
- gegen oxidativen Stress, Umweltgifte, Hautalterung und freie Radikale wirken,
- den durch Wasser und Sonne bewirkten Verlust an Fetten ausgleichen,
- die Wasserbeständigkeit von UV-Filtern verbessern,
- eine homogene Bräunung gewährleisten und schließlich zudem auch
- antimikrobielle Eigenschaften besitzen.
   Vorwiegend für den Einsatz im Bereich Home Care kommen als Wirkstoffe Siliconöle, aber auch oberflächenaktive Substanzen, speziell avivierende Tenside wie z.B. Esterquats in Betracht. Üblicherweise beträgt das Gewichtsverhältnis zwischen dem feinverteilten PMMA und den Wirkstoffen 10 : 90 bis 99 : 1, vorzugsweise 75 : 25 bis 90 : 10.

### Herstellung der Mikrosphären

Zur Herstellung der Mikrosphären werden zunächst das feinverteilte PMMA und die Wirkstoffe miteinander vermischt. Vorzugsweise liegen die Wirkstoffe flüssig oder als wässrige oder alkoholische Lösung bzw. Dispersion vor. Das PMMA zeigt ein hohes Absorptionsvermögen für Flüssigkeiten, so dass nach dem Mischungsvorgang Pasten, Granulate und insbesondere trockene Pulver erhalten werden. Dabei werden die Wirkstoffe nicht simpel auf den Polymerteilchen abgelagert, sondern vor allem physikalisch adsorbiert. Wäre dies anders, könnte in der Anwendung von einer zeitverzögerten Freisetzung nicht die Rede sein, vielmehr käme es zur spontanen Freisetzung. Im Anschluss empfiehlt es sich die beladenen Partikel unter starker Scherung in einer wässrigen oder ölhaltigen Phase zu dispergieren, welche gegebenenfalls noch weitere Zusatzstoffe, wie z.B. Verdickungs- und/oder Konservierungsmittel enthalten können. Unter dem Mikroskop ist zu erkennen, dass diskrete Teilchen vorliegen, welche einen mittleren Durchmesser von deutlich unter 1 mm, vorzugsweise im Bereich von 0,01 bis 0,1 mm aufweisen.

### Gewerbliche Anwendbarkeit

Weitere Gegenstände der vorliegenden Erfindung betreffen die Verwendung der neuen beladenen Mikrosphären in verschiedenen Gebieten, nämlich
- zur Ausrüstung von Fasern und textilen Flächengebilden, insbesondere zu deren Avivage;
- zur Herstellung von kosmetischen und/oder pharmazeutischen Zubereitungen;
- zur Herstellung von Wasch-, Spül- und Reinigungsmitteln;
- zur Herstellung von Nahrungsmittelergänzungsstoffen;
- zur Additivierung von Papier, Farben und Überzügen.

### Beispiele

### Beispiel 1

### Herstellung von Mikrosphären für die Ausrüstung von Textilien und Fasern

In einem 100 ml Dreihalskolben wurden unter langsamen Rühren 5 g Parfümöl und 10 g PMMA-Mikrosphären (Covabead® LH 85 der Firma LCW) solange vermischt, bis der Wirkstoff vollständig von der Oberfläche des Polymers adsorbiert war und ein trockenes Pulver vorlag. Anschließend wurde das Pulver unter starker Scherung in eine Lösung von 1 g Verdickungsmittel (Carbopol® ETD 2020) und 0,5 g Konservierungsmittel (Phenoni®p) in 85 ml Wasser eingerührt. Unter dem Mikroskop konnte beobachtet werden, dass diskrete Mikrosphären vorlagen, die einen mittleren Durchmesser von 0,01 mm aufwiesen.

### Beispiel 2

### Herstellung von Mikrosphären für die Ausrüstung von Textilien und Fasern

In einem 100 ml Dreihalskolben wurden unter langsamen Rühren 10 ml einer 10 Gew.-%igen ethanolischen Lösung von Menthol und 10 g PMMA-Mikrosphären (Covabead® LH 85 der Firma LCW) solange vermischt, bis der Wirkstoff vollständig von der Oberfläche des Polymers adsorbiert war und ein trockenes Pulver vorlag. Anschließend wurde das Pulver unter starker Scherung in eine Lösung von 1 g Verdickungsmittel (Carbopol® ETD 2020) und 0,5 g Konservierungsmittel (Phenoni®p) in 80 ml Wasser eingerührt. Unter dem Mikroskop konnte beobachtet werden, dass diskrete Mikrosphären vorlagen, die einen mittleren Durchmesser von 0,01 mm aufwiesen.

### Beispiel 3

### Herstellung von Mikrosphären für den Bereich der Ernährungsmittelzusatzstoffe

In einem 100 ml Dreihalskolben wurden unter langsamen Rühren 7 g einer wässrigen Zubereitung eines Extraktes von *Valeriana oficinalis* mit einem Wirkstoffgehalt von 25 Gew.-% und 15 g PMMA-Mikrosphären (Covabead® LH 85 der Firma LCW) solange vermischt, bis der Wirkstoff vollständig von der Oberfläche des Polymers adsorbiert war und ein trockenes Pulver vorlag. Anschließend wurde das Pulver unter starker Scherung in eine Lösung von 1 g Verdickungsmittel (Carbopol® ETD 2020) und 0,5 g Konservierungsmittel (Phenoni®p) in 78 ml Wasser eingerührt. Unter dem Mikroskop konnte beobachtet werden, dass diskrete Mikrosphären vorlagen, die einen mittleren Durchmesser von 0,01 mm aufwiesen.

### Beispiel 4

### Herstellung von Mikrosphären für den Bereich der Kosmetik

In einem 100 ml Dreihalskolben wurden unter langsamen Rühren 7 g einer 15 Gew.-%igen Dispersion von Beta Carotin in Mandelöl und 15 g PMMA-Mikrosphären (Covabead® LH 85 der Firma LCW) solange vermischt, bis der Wirkstoff vollständig von der Oberfläche des Polymers adsorbiert war und ein trockenes Pulver vorlag. Anschließend wurde das Pulver unter starker Scherung in eine Lösung von 1 g Verdickungsmittel (Carbopol® ETD 2020) und 0,5 g Konservierungsmittel (Phenoni®p) in 78 ml Wasser eingerührt. Unter dem Mikroskop konnte beobachtet werden, dass diskrete Mikrosphären vorlagen, die einen mittleren Durchmesser von 0,01 mm aufwiesen.

### Beispiel 5

### Herstellung von Mikrosphären für den Bereich Home Care

In einem 100 ml Dreihalskolben wurden unter langsamen Rühren 7 g einer 15 Gew.-%igen Lösung eines Esterquats (Dehyquart® AU 46) in Isopropylalkohol und 15 g PMMA-Mikrosphären (Covabead® LH 85 der Firma LCW) solange vermischt, bis der Wirkstoff vollständig von der Oberfläche des Polymers adsorbiert war und ein trockenes Pulver vorlag. Anschließend wurde das Pulver unter starker Scherung in eine Lösung von 1 g Verdickungsmittel (Carbopol® ETD 2020) und 0,5 g Konservierungsmittel (Phenonip®) in 78 ml Wasser eingerührt. Unter dem Mikroskop konnte beobachtet werden, dass diskrete Mikrosphären vorlagen, die einen mittleren Durchmesser von 0,01 mm aufwiesen.

## Patentansprüche

1. Beladene Mikrosphären mit einem mittleren Durchmesser im Bereich von 0,001 bis 1 mm, **dadurch** erhältlich, dass man feinverteiltes Polymethylmethacrylat oder Methylmethacrylat-Crosspolymer solange mit lipophilen oder hydrophilen Wirkstoffen vermischt, bis diese von der Oberfläche des Polymers absorbiert bzw. adsorbiert worden sind und ein trockenes Pulver, ein Granulat oder eine Paste erhalten wird.

2. Verfahren zur Herstellung von beladenen Mikrosphären mit einem mittleren Durchmesser im Bereich von 0,001 bis 1 mm, bei dem man feinverteiltes Polymethylmethacrylat oder Methylmethacrylat-Crosspolymer solange mit lipophilen oder hydrophilen Wirkstoffen vermischt, bis diese von der Oberfläche des Polymers absorbiert bzw. adsorbiert worden sind und ein trockenes Pulver, ein Granulat oder eine Paste erhalten wird.

3. Verfahren nach Anspruch 2, **dadurch gekennzeichnet, dass** man Wirkstoffe einsetzt, die ausgewählt sind aus der Gruppe, die gebildet wird von Tocopherol, Tocopherolacetat, Tocopherolpalmitat, Carotine, Koffein, Ascorbinsäure, (Desoxy)Ribonukleinsäure und deren Fragmentierungsprodukten, β-Glucane, Retinol, Bisabolol, Allantoin, Phytantriol, Panthenol, AHA-Säuren, Aminosäuren, Ceramide, Pseudoceramide, Chitosan, Dihydroxyaceton, Menthol, Squalan, essentiellen Ölen, pflanzlichen oer tierischen Proteinen und deren Hydrolyseprodukten, Pflanzenextrakten, Siliconölen und oberflächenaktiven Substanzen.

4. Verfahren nach den Ansprüchen 2 und/oder 3, **dadurch gekennzeichnet, dass** man das feinverteilte PMMA und die Wirkstoffe im Gewichtsverhältnis 10 : 90 bis 99 : 1 einsetzt.

5. Verfahren nach mindestens einem der Ansprüche 2 bis 4, **dadurch gekennzeichnet, dass** man die Mikrosphären nach dem Beladen mit Wirkstoffen unter starker Scherung in einem wässrigen oder ölhaltigen Medium, gegebenenfalls in Gegenwart weiterer Zusatzstoffe dispergiert.

6. Verwendung von Mikrosphären nach Anspruch 1 zur Ausrüstung von Fasern und textilen Flächengebilden.

7. Verwendung von Mikrosphären nach Anspruch 1 zur Herstellung von kosmetischen und/oder pharmazeutischen Zubereitungen.

8. Verwendung von Mikrosphären nach Anspruch 1 zur Herstellung von Wasch-, Spül- und Reinigungsmitteln.

9. Verwendung von Mikrosphären nach Anspruch 1 zur Herstellung von Nahrungsmittelergänzungsstoffen.

10. Verwendung von Mikrosphären nach Anspruch 1 zur Additivierung von Papier, Farben und Überzügen.
